Europäisches Patentamt

European Patent Office

Office européen des brevets

(19)

(11) EP 1 170 674 A2

(12) EUROPEAN PATENT APPLICATION

(43) Date of publication:
09.01.2002 Bulletin 2002/02

(51) Int Cl.⁷: $G06F\ 17/30$

(21) Application number: 00125503.3

(22) Date of filing: 21.11.2000

(84) Designated Contracting States:
AT BE CH CY DE DK ES FI FR GB GR IE IT LI LU MC NL PT SE TR
Designated Extension States:
AL LT LV MK RO SI

(30) Priority: 07.07.2000 EP 00114636
24.07.2000 EP 00115867

(71) Applicant: LION Bioscience AG
69120 Heidelberg (DE)

(72) Inventor: Minch, Eric Dr.
69207 Sandhausen (DE)

(74) Representative: Schohe, Stefan
Forrester & Boehmert Pettenkoferstrasse 20-22
80336 München (DE)

(54) Method and apparatus for ordering electronic data

(57) The present invention relates to the field of management of data in a computer system. The invention proposes a new way of automatically ordering data and arranging them in a data structure in a computer. The invention employs the distance as a measure of similarity between data sets. Data sets are assigned to a structure of clusters depending on whether they have a distance above or below a limiting value that is correlated with a peak in the density of distance values.

Fig. 5

**Description**

The present invention generally relates to the field of data storage and especially to the management of data in a computer system in a way to make efficient use of the resources of the computer. In particular, this invention finds application in the field of databases, especially with regard to the way a computer carries out search operations in databases.

A standard problem with databases is to find all items relevant to a search query with the least possible effort and in the shortest possible time. A standard technique is to enter one or more keywords and to search the database for all records comprising these keywords. When a large number of records is to be searched, this frequently means that either the number of answers returned is so large that the related records cannot be reviewed with a reasonable expense of labour and computer time or that the number of answers returned is manageable, but at the cost of having a very restricted query and thus an uncertainty whether all relevant records have been found.

In order to improve on this problem, many databases have a specific data structure wherein the data are "clustered" in groups, wherein each group comprises those records that are related to a specific topic. One example are the search machines on the internet, which provide a plurality of search categories, like business, sports and so on, and sub-categories, e.g. football, tennis etc., to which the various links are assigned. Another example of such a clustering strategy is the clustering of patent documents in a database according to the international patent classification (IPC), where all patents and patent applications are assigned to one or more classes. The problem with this approach is that each record or document has to be assigned to one or more classes or clusters. This assignment, if done by humans, implies a very large effort. Staying with the example of documents to be classified, it is in many cases virtually impossible to review any document in detail and to figure out all possible classes it may be relevant to. Frequently, only a cursory review is possible on the basis of an abstract or even only the title. This means that documents where the relevant parts to a certain topic are not prima facie evident, e.g. documents where in a large text there are only few, but highly relevant text passages, are frequently not classified in the group to which they are relevant and only classified in clusters or groups that at first sight bear little or no relevance to the topic at issue.

A further problem with conventional clustering structures is that they are rigid. In most cases the clustering structure is set up in advance and cannot be changed in the normal course of operation of the computer. In some cases this may have the consequence that the clustering structure is not really suited for dealing with certain queries, e.g. for patents touching different technical fields.

Another problem related to the present invention is the analysis of a sequence of data for similar partial sequences. One field to which this problem is highly relevant is the analysis of data related to genetic sequences.

It is the object of the present invention to provide a method of automatically ordering electronic data sets by a computer in such a manner that related data sets can be more easily found by virtue of the order established.

A further object is to provide a related apparatus and a related computer program. As a consequence of said method the invention also provides a database that is structured according to the result of this method. Finally, it is an object of the present invention to overcome the disadvantages of a static classification.

This object is accomplished by a method of automatically ordering a plurality of sets of electronic data according to similarities by means of a data processing unit, comprising the following steps to be performed by said data processing unit:

- at least for a selected group of data sets, determining the distance D between any two data sets, said distance being defined as a function of a pair of two data sets, rendering a numerical value, said function having a first value $D_0$ defined for the case of a pair of identical data sets, the difference of the distance D of any pair to said value $D_0$ being defined to be either greater than or equal zero for all pairs, $D-D_0 \geq 0$, or less than or equal zero for all pairs, $D-D_0 \leq 0$,
- determining the density of distance values over the range of determined distance values,
- determining one or more limiting values, at least some, preferably all or all but one of the limiting values defining an upper boundary of a peak in said density of distance values, respectively, if said difference is defined to be $D-D_0 \geq 0$ for all pairs, and at least some, preferably all or all but one of the limiting values defining a lower boundary of a peak, if said difference is defined to be $D-D_0 \leq 0$, said limiting values forming an increasing series in case of a plurality of limiting values,
- creating correlation data correlating each data set to one or more clusters in a hierarchy of clusters, the number of cluster levels in said hierarchy corresponding to the number of limiting values, wherein,

if said difference is defined to be $D-D_0 \geq 0$ for all pairs,

- each first level cluster in said hierarchy comprises those data sets related to one another in that for each data set the minimum pairwise distance to other data sets is less than the lowest limiting value,
- each higher order cluster in said hierarchy comprises data sets of a group of one or more clusters of lower levels, wherein, if said group comprises more than one cluster, each cluster in this group forms a pair with another cluster in this group, wherein there is at least one data set of one cluster of said pair having a distance from a data set of the other cluster of said pair which is less than that limiting value that is the next higher one in said increasing series of limiting values to that limiting value defining clusters at the next lower level,

and, if said difference is defined to be $D-D_0 \leq 0$ for all pairs,

- each first level cluster in said hierarchy comprises those data sets related to one another in that for each data set the minimum pairwise distance to other data sets is greater than the highest limiting value,
- each higher order cluster in said hierarchy comprises data sets of a group of one or more clusters of lower levels, wherein, if said group comprises more than one cluster, each cluster in this group forms a pair with another cluster in this group, wherein there is at least one data set of one cluster of said pair having a distance from a data set of the other cluster of said pair which is greater than that limiting value that is the next lower one in said increasing series of limiting values to that limiting value defining clusters at the next lower level.

The invention may provide that the step of creating correlation data is performed according to one or more of the following rules:
if said difference is defined to be $D-D_0 \geq 0$ for all pairs,

- each first level cluster in said hierarchy comprises at least one data set to which all other data sets of said cluster have a distance less than the lowest limiting value,
- each second level cluster in said hierarchy comprises at least one data set to which all other data sets of said cluster have a distance less than the second lowest limiting value,
- each higher order cluster in said hierarchy comprises at least one data set to which all other data sets of said cluster have a distance which is less than that limiting value that is the next higher one in said increasing series of limiting values to that limiting value defining clusters at the next lower level,

and, if said difference is defined to be $D-D_0 \leq 0$ for all pairs,

- each first level cluster in said hierarchy comprises at least one data set to which all other data sets of said cluster have a distance greater than the highest limiting value,
- each second level cluster in said hierarchy comprises at least one data set to which all other data sets of said cluster have a distance greater than the second highest limiting value,
- each higher order cluster in said hierarchy comprises at least one data set to which all other data sets of said cluster have a distance which is greater than that limiting value that is the next lower one in said increasing series of limiting values to that limiting value defining clusters at the next lower level.

It should be noted that the above-mentioned criteria for assigning data sets to clusters do not necessarily imply that there are two, three or more cluster levels, but merely define assignment criteria for the case such levels exist. It should also be noted that a cluster may consist of one single element, which is the case if there is no other data set having a distance to this data set above or below the relevant limiting value, respectively. If not indicated otherwise, the distance is supposed to be positive subsequently.

Whereas the above-mentioned criteria of a minimum pairwise distance for data sets of a first level cluster (for positive distances, $D \geq D_0$) alone leads to reasonable results in many instances, e.g. when determining metabolic functions based on relaxation times, it allows a cluster to comprise data sets which have a distance that is, in terms of its absolute value, greater than the relevant threshold. For some embodiments, the invention may provide more stringent criteria in that for each data set in the cluster the value of a global or aggregate function of the distance to other data sets is less (or higher, respectively) than the respective limiting value or, given the case, the value of said function applied to this limiting value. Such aggregate functions especially comprise the mean pairwise distance of the data set to all other data sets in the cluster which may be the arithmetic mean distance, the geometric mean distance or mean distance defined in another way. A further example of such an aggregate function is a median distance of a data set to all other data sets, i.e. the distance separating the lower 50% of the distance values from the remaining 50%, the latter lying above this value. One may also think of generalising this concept by choosing that distance value as the value of the respective function, below which a certain percentage, e.g. 40% or 60% of the distance values lie. Still another possible aggregate function is the modal distance, i.e. the distance occurring most frequently or, more generalised, the average of the distances in an interval of predetermined length comprising most of the distance values.

For example, if the maximum of the absolute value of the pairwise distance is chosen as the selection criterion, the invention provides that each cluster consists of those data sets that have a distance from each other that is always less than the respective limiting value in case of $D-D_0 \geq 0$ and greater than the respective limiting value in case of $D-D_0 \leq 0$, respectively. Thus for any pairs of data sets the distance between the data sets of this pair is not larger or lower, respectively, than the respective limiting value. This assignment may lead to the same data set belonging to different first level clusters. For example, if data sets B and C each have a distance from a data set A that is less than the respective limiting value (considering the distance to be defined as positive), this does not necessarily mean that B and C have a distance from each other that is less than the respective limiting value. If this is not the case, there may be two clusters comprising data set A on the first level, namely a first cluster comprising the pair (A, B) and a second cluster comprising the pair (A, C).

Still another clustering strategy may provide that each cluster consists of data sets that have a distance less (or higher) than the respective limiting value with regard to one or more selected reference data sets. These reference data sets may be selected randomly or be determined by a user. The latter case is especially useful, if the user has already found a record that he considers as particularly relevant and now wishes to find similar data records. In this case, he will specify this record as the reference data set and have the computer perform the method according to the invention to come back with a hierarchy where one or more, preferably all clusters containing this reference data set are defined through the distance the elements of the clusters have from this reference data set.

For the two last-mentioned clustering criteria, each first level cluster will consist of all data sets which have a distance from each other or from one or more reference data sets such that the absolute value of the difference of said distance to the distance for a pair of identical data sets, $|D-D_0|$, is less than a given lowest boundary. This means that the most similar data sets are combined in one lowest level cluster. If the clusters are defined by one or more reference data sets, the cluster comprises all data sets that are closest to identity and thus most similar to said reference data sets. If the requirement is that all data sets in said cluster have a distance from each other less (or greater) than the respective limiting value, each cluster at the first level comprises the data sets that are most similar to each other, taken as a group. For example if the data sets are documents, a document may be relevant to different fields and thus have a distance less than the respective limiting value with regard to documents in the first field as well as to documents in the second field. In this case, the method will return two first level clusters containing this document, wherein each of these two clusters may be considered to relate to specific technical field. This overcomes some of the problems of a static classification.

As to clustering criteria for higher levels, the invention may provide that the same clustering criteria apply as for the first level clusters, especially that for any data set contained in said higher level cluster the minimum absolute value of the pairwise distance or an aggregate function of the distances of this data set to other data sets, such as the maximum absolute value of the distance, the mean distance or the like, is less (or higher, respectively) than the respective limiting value for this level.

For example, the higher order clusters may be defined by assigning all elements of two clusters at lower levels to said higher order cluster that comprise data sets having a distance less than (or greater than, in case of $D-D_0 \leq 0$) the respective limiting value from each other or a reference data set which may be given or selected randomly. Another possibility is to define each higher order cluster by assigning all data sets to this cluster that have a distance from each other or one or more reference data sets that is less (or greater, respectively) than the respective limiting value.

The invention may, however, also provide that the relevant criterion is that the distance of the lower level clusters, the elements of which are to be comprised in the higher level cluster, is less (or higher) than the respective limiting value. A distance of clusters may be defined in any suitable manner, e.g. as the minimum distance for two data sets taken from the two clusters to be compared, or, similar to the clustering strategies discussed above for the first level, the maximum distance for a pair of data sets taken from the two clusters, the mean distance for such pairs or another aggregate function, as discussed previously. Likewise, similar to what was discussed for the first level clustering strategy, a reference cluster may be picked out and the elements of the higher level cluster may be determined as the elements of those clusters that have a distance less (or higher) than the respective limiting value with regard to the reference cluster. Using this approach, single data sets at a lower level are treated as a cluster consisting of one element. As a further alternative, the method of the invention may provide that for the assignment of data sets to higher level clusters by assignment of an entire cluster, the lower level clusters are represented by a single surrogate data set created for that purpose and incorporating information from the aggregate of its members. Thus, for example in the case that the data sets correspond to documents, a single surrogate document may be created for a cluster either by concatenating the text of all documents in the cluster, by listing the unique terms within all documents in the cluster, by listing the terms within those documents which most distinguish those documents from documents not in the cluster, and so forth.

The invention may provide that different clustering criteria are applied to different cluster levels, although in the preferred embodiment the criteria are identical for all cluster levels at a level higher than the lowest one. If a mean, median or modal distance is implied, the result of clustering may be sensitive to the order of considering the items to be clustered. The addition of a given item before consideration of another may cause it to be either excluded or included, whereas when exchanging the order of considering the two items would have resulted in the opposite decision and a different cluster. This sensitivity to order can be avoided by applying resampling strategies like subsampling, especially bootstrap sampling. One may also analyze the stability of a cluster structure by repeating the process with a random selection of items omitted. Another approach may be a Monte Carlo Technique, wherein random orders are tried and the cluster or cluster structure having a probability of occurrence greater than a certain limit, e.g. 40%, is chosen.

Usually, each level except the highest one corresponds to a peak in the density of distances. The hierarchy may be defined to comprise only one cluster at the highest level which is identical to the totality of data sets considered. In this case the highest limiting value (in case of a positive distance) is either infinity or a number greater than the largest distance between any two data sets. One may, of course, define the hierarchy in such a manner that there is more than one cluster at the highest level, which may be sensible if clusters are allowed to be linked to more than one cluster at a higher level.

The hierarchy established according to the method of the invention may be a sub-hierarchy of a larger hierarchy, i.e. levels above a certain hierarchy level are determined by different criteria. Likewise, a certain limiting value may not be determined as a boundary to a peak, e.g. in case of the highest limiting value. It may also be considered to add additional sub-levels between two levels of the cluster hierarchy determined according to the preceding rules. These sub-levels may be determined according to different criteria. This may be viewed as a sub-structure for a cluster determined according to the present invention. But even in this case there will still be a hierarchy of cluster levels determined on the basis of the distance, as set out previously.

The invention may provide that the correlation data comprise data correlating one or more clusters of a lower level to a cluster of a higher level. Thus, instead of having individual correlation data for each data set, collective correlation data correlating an entire lower level cluster to a higher level cluster are provided by way of a pointer or the like, the allocation of individual data sets to said lower level cluster being determined by the respective correlation data for that cluster.

Alternatively or in addition the invention may provide that the correlation data comprise data correlating at least one data set and/or one cluster to a cluster at a level higher than the next higher level.

The invention may provide that said data correlating the data sets to clusters comprise:

- data correlating each data set to a first level cluster,
- data correlating each cluster at a level less than the highest level to one cluster or a plurality of clusters at a higher level.

The invention may also provide that said data correlating the data sets to clusters comprise:

- data correlating each data set to one or more clusters at any level,
- data correlating each cluster at a level less than the highest level to one cluster or a plurality of clusters at a higher level.

The correlation data created according to the present invention may be used in different manners. They can form the basis of a data base or a data structure in the processing unit, they may be displayed or otherwise output to an output device or communicated to another system.

A method according to the invention may comprise the step of controlling a display device on the basis of said correlation data to create a graphic symbolic display of clusters at one or more levels.

In this embodiment the method according to the invention may comprise the step of selecting a cluster in said display by input through interaction means and executing one or more of the following steps in response to input through the interaction means:

elements of the selected cluster at one or more lower levels are displayed,
elements of a higher level cluster comprising said selected cluster, especially a next higher level cluster, are displayed.

The method may also comprise the step of creating a directory structure on the basis of said correlation data, each cluster corresponding to a directory and each cluster level to a directory level.

In this embodiment it may be provided that said data sets are stored as files of directories at the lowest directory level.

The method according to the invention may comprise the step of creating a database from said data sets and said correlation data, the data model of said data base being defined by said hierarchy of clusters.

The invention may provide that the data base is a relational data base, wherein the keys are defined by cluster names and the values are defined by the name of the parent cluster.

The invention may also provide that the data base is an object oriented data base, wherein the keys are defined by cluster names and the values are defined by the name of the parent directory.

In said object oriented data base, further values may be defined by a set of cluster names corresponding to sub-clusters within a cluster.

Instead of establishing the cluster structure on the basis of all data sets, the invention may provide that a group of data sets is selected randomly and said limiting values are determined on the basis of said selected group of data sets.

The invention may provide that a group of data sets comprising one or more predetermined data elements is selected and said limiting values are determined on the basis of said selected group of data sets.

According to an embodiment of the invention, the total range of distance values is completely partitioned into a sequence of distance intervals and said density of distance-values is determined as the number or normalized number of distance values in each distance interval, the normalized number being defined as the number of distance values per unit distance interval.

The invention may provide that a plurality of partitionings of said total range of distances with increasing interval size is established and said density is established for each of said partitioning.

The invention may further provide that preliminary limiting values are determined for each partitioning and optimized limiting values are obtained by averaging or fitting said preliminary limiting values, wherein said correlation data are established on the basis of said optimized limiting values.

It may furthermore be provided that a distribution of distance density values is established from said partitioning and said limiting values are determined from said distribution.

The invention may provide that an average of the distance density is formed for a plurality of distance values and said limiting values are determined from said averaged density.

The method may provide that one or more limiting values are determined as a minimum or zero point of the density adjacent to a maximum of said density.

Said density may also be the above-mentioned average density.

According to an embodiment a curve is fitted to density values and one or more limiting values are determined as the point of a minimum or zero adjacent to a maximum of said curve.

Especially, said curve may be fitted to a distribution of density values.

Where a distribution of density values is established, the invention may provide that said curve is fitted to said distribution such that it is within the standard deviation of each density value.

According to a preferred embodiment of the invention, the number of limiting values and thus the number of cluster levels is dependant on the number of peaks of either the density or the curve that is fitted to a density function or a density distribution. According to a specific embodiment, the number of cluster levels is equal to the number of peaks or to the number of peaks plus one.

The invention may, however, also provide that the number of cluster levels does not exceed a certain number. If the peaks of said function render a number of levels that is less than a predetermined maximum number, this number is chosen as the number of levels, whereas, if this number exceeds the predetermined maximum number, a hierarchy with this predetermined maximum number of levels is chosen. Especially, the invention may provide that only such curves are used for fitting the density function or the density distribution that only render a maximum predetermined number of peaks or that such fits are rejected which render a number of peaks greater than a predetermined maximum number.

The invention may provide that said curve is a polynomial or a trigonometric function or a function of trigonometric functions.

In one embodiment of the invention said data sets comprise text data and said distance is a function of the number of common words.

In one embodiment of the invention said data sets comprise genetic information and said distance is a function of the data elements at a certain position in two sequences or partial sequences. This function may especially depend on the number of identical data elements succeeding one another in two partial sequences in said data sets.

The invention also provides a database obtainable by a method as described above. It also provides for a computer readable medium wherein this database is embodied, especially stored thereon.

The invention also provides a computer program adapted to perform all steps of a method as previously described, especially such a computer program embodied in a computer readable medium.

The invention also provides an apparatus for automatically ordering a plurality of sets of electronic data according to their similarities, comprising data processing means-performing the steps of a method as previously described.

The apparatus may comprise a display device and said data processing means controls said display device according to a respective method set out above.

The invention may also provide that it comprises data storage means for storing said data sets in a directory structure, said directory structure being obtainable according to a method as previously described.

The invention also provides a method of operating an apparatus for searching and/or ordering data sets, said apparatus containing or being capable of obtaining correlation data obtainable according to a method as previously described, characterized by the following steps:

- inputting data elements,
- selecting data sets comprising these data elements,
- selecting a cluster at one, especially the lowest level in said hierarchy,

whereupon said apparatus outputs data related to the elements of said selected cluster.

The invention may provide that the apparatus, having outputted data related to the elements of said selected cluster outputs data related to the elements of the next higher order cluster comprising said selected cluster and not contained in said selected cluster.

This procedure may be repeated in that the apparatus, having outputted data related to the elements of a first cluster, outputs data related to the elements of the next higher order cluster comprising said first cluster and not contained in said first cluster.

Said selected lowest level cluster may be selected by specifying one or more data sets to be contained in said cluster.

The invention may especially provide that said apparatus outputs the data related to said data sets in an order such that data related to elements of a lower level cluster are output prior to data related to elements of a higher order cluster or clusters.

According to one embodiment the data related to the elements of a cluster are the data sets that form said elements.

The invention may provide that the data related to the elements of a cluster form a list of the data sets forming said elements.

The invention may also provide that said apparatus proceeds with outputting data related to elements of at least one higher order cluster only upon a related input by a user.

According to a preferred embodiment of the invention, the limiting values are chosen such that each limiting value separates two peaks of the distance density or, if there is no further peak, puts an upper limit to the peak. However, one may also contemplate embodiments where some of the limiting values are established by other criteria so that one or more pairs of adjacent limiting values do not enclose a peak. This may be appropriate in cases where there is no pronounced peak structure. Likewise, in cases with tiny peaks, it may be appropriate to have a pair of limiting values enclose two or more peaks. In any case, one will usually have at least one or two, preferably three to five pairs of limiting values that will enclose one or more peaks, of course also depending on the number of cluster levels that are desired.

One will usually chose the limiting values such that they are close or equal to the point where the actual distance density approaches a zero for the first time after the peak or, if there is no zero, a pronounced minimum. It may, however, be appropriate to shift this limiting value back or forth in order to assign certain pairs of data sets to a lower level cluster or to a higher level cluster. This may, for example, be appropriate in cases where there is a small local maximum super-imposed to the minimum of a larger peak structure.

In the present context, a data set may be any well defined sequence of bits or bytes that can be accessed by a data reading device. Especially, it may be a directly accessible data unit or a partial sequence in a sequence of data. For example, it may be a file or a record. The data sets will usually comprise several elements, which may in turn be a sequence of bits and bytes, such as data words or, in a text file, words of a written text. As the data sets may be of varying length, it may occur in some cases that among the data sets there are some which comprise only one of said data elements.

The method according to the invention automatically orders the data sets according to a function of the data elements called distance.

The term "distance" is primarily to be understood in a mathematical sense, i.e. it is a symmetric or asymmetric function which assigns a numerical value D to two data sets which is either above the value for two identical data sets, $D_0$, for all pairs of data sets or below said value $D_0$ for all pairs of data sets. It may conform to the strict mathematical definition of a distance of having the value of zero for identical arguments (i.e. identical data sets), but this value may, of course, be shifted, because in the context of the present invention it is only the order established by the distances on the data sets that matters and not the numerical value of the distance. Although one will usually choose the distance to be positive, one could also imagine the use of a negative distance simply by replacing D by a negative value D' = -D. Subsequently, the distance will always be presumed to be positive, unless explicitly noted.

The invention may provide that the distance is defined as a function depending on the data elements of the data sets forming said pair. Especially, it might be a function depending on the common data elements. This definition of the distance is especially useful for text files, where the arguments of the function defining the distance are words of a written text.

In the context of the present invention, a preferred distance measure is a function related to the number of common data elements. This function is usually defined in such a manner that identical data sets have a distance zero and the distance becomes the greater, the less identical data elements there are, the maximum distance being defined by a maximum value or by infinity.

For example, if the data sets are documents or text files, the distance may be defined as depending on the number of words in said text. Considering two text files A and B just as a mathematical set of words, the distance D may be defined as

$$D := \frac{|A \cup B|}{|A \cup B|} \qquad (1)$$

wherein || denotes the number of elements in a set. This distance is known as the Tanimoto distance. If the two documents are identical, the distance is one. If there are no common words in the file (which will be rare in a text file), the distance is infinity. If the two text files are different and comprise different words, the distance will be something between one and infinity. It should be noted that even in case document A is entirely contained in document B, the distance will nevertheless not be one, but rather be

$$D = \frac{|B|}{|A|}$$

Staying with the example of text files, it should be noted that the distance defined by (1) does not rely on the meaning or similarities in content. Rather, the method of the present invention using this distance mechanically checks all data elements which represent words of a written text whether they are identical or not. In principle, documents which are completely unrelated in their contents may be assigned a distance less than infinity, simply because in any text there is a certain number of common words, like "and", "if" and so on. One may choose to disregard such words when evaluating the distance.

It is not required that the distance between two data sets be symmetric. In the example above, in which document A is entirely contained in document B, one may wish to indicate the relative closeness of A to B by defining a distance:

$$D(A,B) := \frac{|A \cap B|}{|A|}$$

such that the distance from A to B (in this case) is much less than the distance from B to A.

In real life, in any two texts relating to a specific topic, there will be keywords which are unique for that topic. A certain combination of such unique keywords will be rather specific for a certain topic. Text files having this combination of keywords will have a smaller distance than text files which do not comprise this combination of keywords so that text files relating to the same topic can be recognized by having a distance below a certain level. It is, however, one of the beauties of the present invention that a user or programmer does not have to know what the relevant keywords are for a certain topic or to identify these keywords in the text. The mere fact that in two documents related to the same topic there is a number of common specific keywords will reduce the distance between these two documents. Thus, two text files are likely to be more closely related in content, the smaller the distance is. A refinement of the method of the present invention may provide that certain non-specific words like "if', "when", "and" and so on are not taken into account when calculating the distance, thus enhancing the impact of specific keywords on the distance. A further refinement of the method may provide that the frequencies of the data set elements (or words, in the case of documents) may be taken into account in calculating the distance, instead of their simple presence or absence, such that data sets in which elements tend to occur in similar frequencies are defined as being closer than those in which the same elements occur in dissimilar frequencies.

Another distance measure for evaluating similarities between two data strings is the so-called Hamming distance for ordered sets of equal length. Basically, the Hamming distance assigns a zero to any position where the data elements are identical and a one where the data elements are not identical and the distance is defined as the sum of these values over all positions.

For example, if the data elements to be compared are letters, the words "pattern" and "western" have a distance of three, because the first three letters are different and the last four letters are identical. It should be noted that the elements to be compared need not be letters, but could also be words or syllables or, going in the opposite direction, be bits or bytes. For example, if the elements to be compared are words, the sentences "the weather is fine" and "the grass is green" have a distance of two, because the first and third words are identical and the second and fourth words are different. Of course, the Hamming distance may be extended to cover also strings of different length by assigning a value of one to all positions of the longer string that do not have a matching position in the shorter string. The Hamming distance is suitable for cases where the order of the data elements matters, e. g. if the data sets comprise genetic sequences. If the order is not important, other distance measures are preferred. It should, however, be noted that the application of the Hamming distance is not restricted to sequences of data elements. It may also be defined on sets, i.e. collections of elements which appear to be unordered, when an order is explicitly or implicitly defined on the sets. For example, an order that might be implicit to the set is the alphabetical order in a sets of words, although the sequence of words in a representation of the set, if written down, need not be alphabetical.

Another family of distances applicable to a wide variety of data types is known as the edit distance, and is defined (for each such data type as appropriate) as the minimal number of changes required to transform one data set into the other. For genetic sequences, this corresponds to the minimum number of insertions, deletions, and replacements required to change one sequence to another. For text documents, it is the number (and perhaps the length) of text insertions, deletions, replacements, and movements required. For mathematical structures such as trees or graphs, it is the number of nodes to be deleted and added plus the number of edges to be deleted, added, or moved. Each of these edit types (add, delete, replace, move, etc.) can furthermore be weighted so as to increase or decrease its contribution in calculating the distance.

The above-mentioned examples show that it depends on the specific application what is chosen as the data elements that form the basis for the distance measure. In most cases, these data elements will not be identical to individual bits, but rather form data sequence of a plurality of bits or even of a number of subsequences.

It should be understood that the present invention is not restricted to a specific definition of the distance. Apart from the examples set out above, other definitions of the distance can be used, such as those discussed in T. Kohonen, Self-Organisation and Associative Memory, (1988). The distance may not be related to words, but to different data elements. For example, a distance measure to be applied in genetics is discussed in L. Cavalli-Sforza, P Menozzi, A. Pinzza, History and Geography of Human genes, (1994).

The distance is also not necessarily exclusively related to common data elements. Again returning to the example of text files, synonyms may be treated as identical words. Likewise, in order to account for the inflection especially in the German language, words having the same root may be treated as identical. Going even further, one could imagine an application of the invention to text files in different languages where words meaning the same in different languages are treated like identical words of two documents in the same language. For example, staying with the example of the Hamming distance, one can define an extended Hamming distance by assigning the value of zero to the pairs (the, das), (weather, Wetter), (is, ist), (fine, schön) so that the distance both of "The weather is fine" and "Das Wetter ist schön" is the same from the sentence "The grass is green". On the other hand, the two sentences "The weather is fine" and "Das Wetter ist schön" will have a distance of zero. Again, the invention does not depend on somebody recognizing that these last-mentioned sentences mean the same in two different languages. Rather, the invention merely employs predetermined functional relations between data elements. It should be understood that any of these exceptions or extended relations are comprised in the definition of the distance, which is predetermined.

The concept of a distance of data sets is used according to the invention to create a data structure. Surprisingly, it was found that in many cases the frequency with which a certain distance value occurs, shows peaks and valleys or zeros. According to the invention, these valleys or zeros are used to classify the data sets in a hierarchical structure. Taking again the example of text files or documents, those files having a small distance may be considered to be more closely related to each other.

One strategy of assigning data sets to clusters may be as follows. Starting from one selected file, all files including this file that have a minimum pairwise distance that is less than the first valley are assigned to a first cluster at the lowest level. From the remaining files, another file is picked out and all files having a distance less than the value of the first valley from this file are assigned to a second cluster at the lowest level and so on.

In the preferred embodiment, rather than selecting items and assigning them to clusters one by one at each level, a graph is constructed with data items as the vertices and interitem distances as the edges; to cluster the items, all edges with lengths bounded by the limiting value are used to extract a partial subgraph; the partial subgraph is partitioned into connected components, each of which corresponds to a cluster at that level. Extracting a partial subgraph can be effected by removing all edges with lengths greater than the limiting value, resulting in some graph portions becoming disconnected. One will readily understand that in order to get a connected subgraph it is sufficient that there is at least one edge of a vertex to another vertex having a length less than the limiting value so that this graphical procedure corresponds to the requirement of the minimum pairwise distance being less than the limiting value.

Other clustering strategies may be embodied in a similar manner. For example, if the requirement is that the maximum pairwise distance is less than the limiting value, the invention may provide that after having determined all files having a distance less than the first valley from a selected file, all files are checked whether they have a distance from all other files thus selected which is less than the value of the first valley. Files that do not fulfil this criterion are removed from the cluster so that the cluster eventually consists only of files where any pair of files has a distance less than the value of the first valley. Thereafter, one of the files removed from the cluster is selected as a new reference file for establishing the next cluster and the process is repeated to create the next cluster. It should be noted that this next cluster may comprise files of the first cluster as well, i. e. all files are considered to establish this second cluster. Thereafter, another file is selected and so on and the process is repeated until there is for any pair of files having a distance less than that of the first valley one cluster containing this pair.

In the preferred embodiment using the graphical approach, to cluster the items at a given level with the requirement of the maximum pairwise distance being less than a given value, all edges with lengths less than that level's upper bound are used to extract a partial subgraph; the partial subgraph is then searched for cliques in which every item is directly connected to every other. Components which are connected, but not completely connected will thus be excluded as clusters from that level, since the connections which complete the clique will necessarily be found only at higher levels with greater distances.

In case the clustering strategy allows the assignment of a data set to multiple clusters, according to one embodiment the assignment may be carried out in two stages. In the first stage, the more stringent criterion is applied (e.g., that no interitem distance exceeds the upper boundary of the level) in order to generate a set of clusters which are characterized by high homogeneity. In the second stage, the less stringent criterion is applied (e.g., that at least one distance is less than the upper boundary), and data sets meeting this criterion are assigned to every cluster for which it is met.

In order to create a group or cluster at the next higher level, the next higher valley in the density or frequency of distances is determined. There are several possibilities to assign elements to this higher order cluster, as previously described. One specific method is to pick out one file from one cluster at the lowest level and to check all clusters at the lowest level whether they comprise data files that have a distance less than the value of the second valley and then assign the elements of all such clusters to this second level cluster. For example, a link from the second level cluster may be established to the first level clusters. Another way is to proceed essentially in the same way as for the first level, e. g. to pick out one file and to establish which other files have a distance less than the value of the second valley and to assign all such files to the second level cluster. When doing so, it may occur that, starting from one specific file of one first level cluster, there may be files in another first level cluster that have a distance less than the value of said second value, whereas other files in the same cluster have a distance value that is higher than the value of the second valley. In one alternative, one may accept that the second level cluster will comprise files which partly have a distance higher than the limiting value. Alternatively, one will split said first level cluster into two first level clusters which will be assigned to different second level clusters or assign this first level cluster to two different second level clusters. This may, however, lead to a complicated clustering structure.

In the preferred graphical approach, one may proceed as described for the first level cluster, i.e. remove all edges that have a length greater than the respective limiting value. In another example, one may proceed by selecting one vertex as a reference vertex and removing all edges originating from this vertex and having a length that is greater than the respective limiting value.

The preferred approach is to assign only whole clusters to higher level clusters, i.e. all elements of a lower level cluster assigned to a higher level cluster are automatically elements of this higher level cluster. In order to do so, one has to define a suitable distance between clusters, as described previously, e.g. in the sense that the distance is the smallest distance between two elements of the two clusters. Of course, the distance defined in this manner is to be chosen such that it simultaneously defines also some implication for the distances of the elements that form the clusters. Having replaced the individual files by entire clusters and having defined a suitable distance between the clusters, one may proceed for establishing a cluster at a higher level as previously described with regard to setting up clusters at the lowest level, the clusters taking the place of the individual files in the previous example.

Graphically one may proceed by replacing the individual vertices of the first level by new vertices representing clusters and redrawing the edges between these new vertices on the basis of the distance defined between the two clusters. Alternatively, one may stay with the original graph where vertices represent individual files and remove all edges that are greater than the limiting value for this level or less than limiting value for the next lower level. A lower level cluster may be attributed to a higher level cluster, if there is at least one remaining edge leading to an element or vertex related to another lower level cluster or if the vertices of one lower level cluster are entirely connected to vertices of another lower level cluster, meaning that any edge between element of two different clusters is between the above-mentioned two limiting values, to name two examples.

The invention automatically provides a classification of data files, which ean be done on the spot, especially in connection with a specific search topic. For example, a person using an apparatus or a database according to the present invention may input certain very general keywords which lead to a large, but manageable number of hits. Subsequently, the computer will order these files in a clustering structure according to the invention. Picking out one record as a reference record that was found to be particularly relevant, the computer can tell the searcher which records are likely to be equally relevant, namely those records that are in the same cluster at the lowest level. If the user is not satisfied with those files contained in the first level cluster containing the reference file, the computer is further able to tell the user that there is a number of further records that could be relevant, namely those files contained in the related cluster at the second level which contains the reference record and which are not contained in the first level cluster. If this does not satisfy the user, the computer will propose the records contained in the respective third level cluster and so on. In other words, the computer will provide the user with an order of the records in which he is most likely to find relevant records with least possible effort. Instead of inputting keywords, one may also introduce a reference record containing the information to be searched for, e.g. an abstract of a new method, into the database as a temporary record and then establish a cluster structure for all records including this temporary record. The cluster at the lowest level containing this temporary record will then contain the most relevant records in the original database.

A specific example how the invention may be put into practice will be given subsequent with reference to the drawings. As this is rather illustrative, this example is described as related to text files or documents, but it can also be applied to other kinds of data sets.

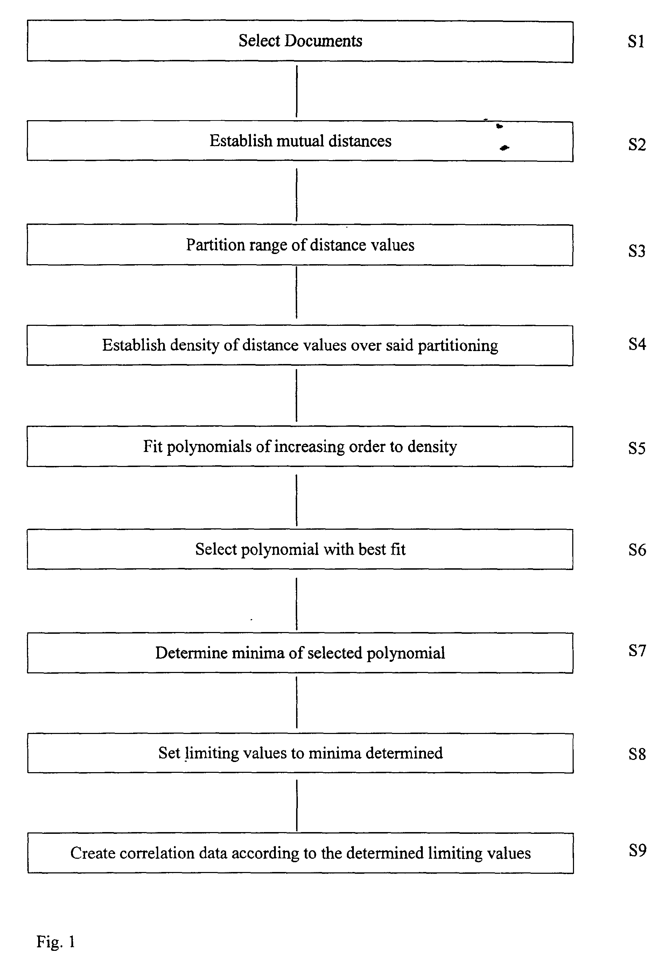

Fig. 1    shows the essential steps of an algorithm for establishing the cluster structure.

Fig. 2    shows a modified algorithm.

Fig. 3    shows a graphical display of documents forming a sample,

Fig. 4    shows a histogram of the density of distances derived from the sample shown in Fig. 3,

Fig. 5    shows the sample of Fig. 3 with lines indicating the distance between documents and lines corresponding to a distance greater than the first cutpoint having been deleted,

Fig. 6    shows a graphical diagram similar to that of Fig. 5 with lines corresponding to distances greater than the second cutpoint being deleted,

Fig. 7    shows a diagram similar to that of Fig. 5 and 6 with documents corresponding to the same first level cluster being collapsed into one symbol and lines corresponding to distances greater than the second cutpoint or less than the first cutpoint being deleted,

Fig. 8    shows a diagram similar to that of Fig. 7 with lines corresponding to distances greater than the third cutpoint or less than the second cutpoint being deleted.

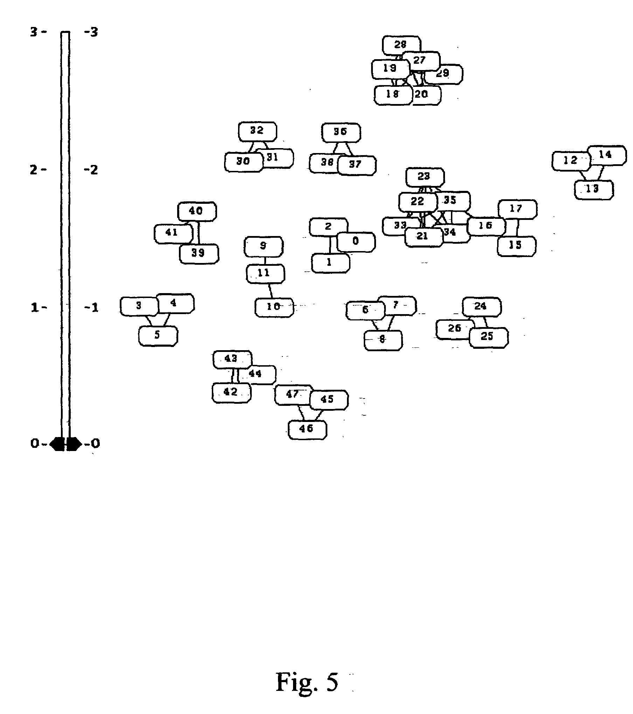

It should be noted that the length of the lines between the boxes indicating documents in Fig. 5 to 8 is unrelated to the distance between the corresponding documents.

In a first step (S1) the documents that are to be clustered are selected. These documents may comprise the totality of documents comprised in the database or only a subset thereof, e.g. a subset of those documents which comprise certain keywords.

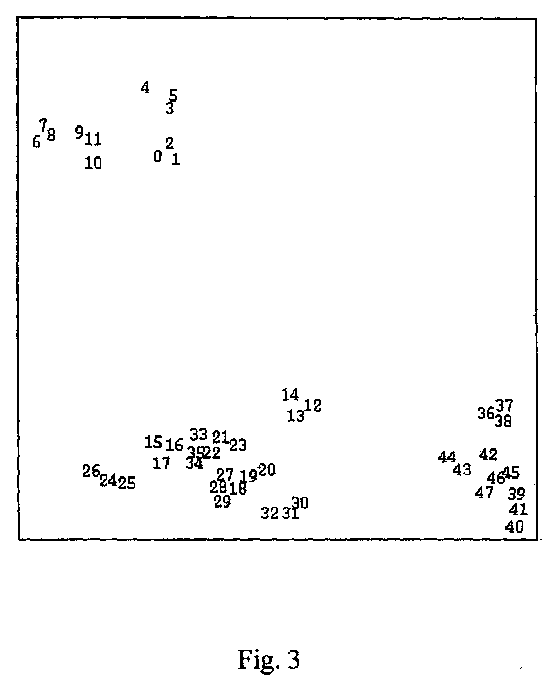

Fig. 3 shows a graphical display of 48 documents symbolically represented by numbers 0 to 47. These documents are arranged in a manner that the distance on the screen corresponds to the distance D between documents, e.g. the distance D defined by formula (1). They appear to be grouped to the naked eye as three or four major clusters, each cluster consisting of some smaller clusters of two or more documents.

In a second step (S2), the mutual distance of all documents is established.

In the next step (S3 and S4), the density of distance values is established. The density of distance values is defined as the number of times a certain distance value occurs per unit distance interval, i.e.

$$\rho_D := \frac{d\nu(D)}{dD}$$

where $\nu(D)$ is the frequency of occurrence of a certain distance value among the selected documents. In practice one will not use the differential ratio, but a difference ratio, i.e.

$$\rho'_D := \frac{\Delta\nu(D)}{\Delta D}$$

where $\Delta\nu$ is the number of pairs of documents with a distance in an interval of width $\Delta D$ around D.

In order to accomplish this step one will partition the entire range of distance values into bins and define the density for each bin as the number of pairs of documents which have a distance falling within the range of this bin. Assigning this density to each bin will result in a step function or histogram for the density. Usually one will choose the distance to be positive with the value for identical documents being 0 or 1.

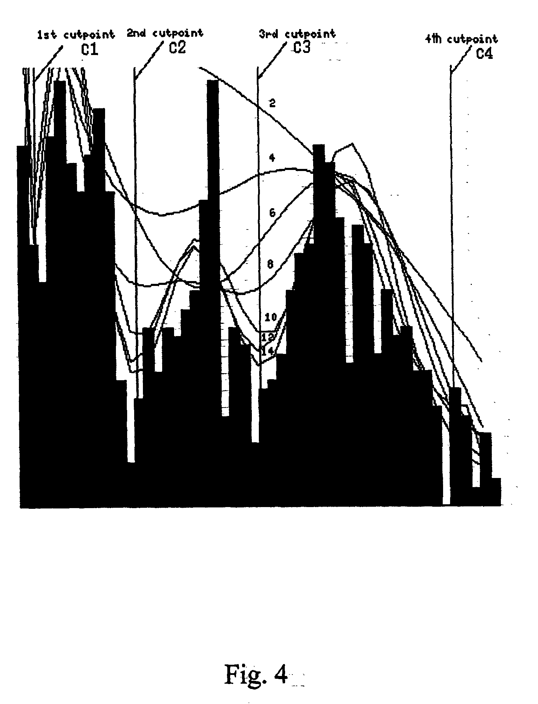

The histogram resulting from the distribution of documents shown in Fig. 3 is shown in Fig. 4. This histogram uses 50 bins of pairwise distances for the 48 items being considered. To the eye, there appear to be three or four major peaks. One can see that there are three major regions separated by deep valleys and possibly a fourth smaller region at the very right. There are, however, a number of higher valleys comprising only to two or three bins, where it is not clear whether they are real valleys or spurious results of the small size of the sample.

In the next step (S5) polynomials of increasing order are fitted to the histogram and the goodness of fit is evaluated. For example, in a first step, a second order polynomial is fitted as well as possible to this histogram, then a fourth order polynomial is fitted, then a sixth order polynomial and so on. The best possible fit of each order is compared and the degree of the polynomial with the best fit is chosen (step S6). In the preferred embodiment, these polynomials are constrained to pass through or near the origin. The fit of polynomials of even order from second to fourteenth order to the histogram derived from the sample of Fig. 3 is shown in Fig. 4. The polynomials fitted to the distribution are shown overlaid to the histogram and labelled by their degree. It turned out that a polynomial of degree 10 results in the best fit.

In the next step (S7) the minima of the polynomial with the best fit are determined. The minimum following the first maximum will form an upper limit for the first peak in the density of distances, the next minimum, if present, an upper limit for the second peak and so on. Accordingly, the first minimum will be the lowest limiting value or cutpoint defining the first level clusters, the second minimum will form the second lowest limiting value or cutpoint and defining the second level clusters and so on (step S8). The final cutpoint is set to positive infinity or to a large number. The highest order cluster is the entirety of data sets or the subset of data sets on which the method was applied. One may, however, define the final cutpoint also by setting it to the boundary of the highest peak in which case there may be two or more clusters at the highest level.

The finite cutpoints C1 to C4 resulting from the best fit with the ploynominal of degree 10 are indicated in Fig. 4 for the histogram shown therein. The final cutpoint (infinity) is not indicated. The cutpoint C4 was automatically discarded, because it included less than 5% of the distances and thus could not include a meaningful level of clustering. Contrary to what one would expect from an inspection with the naked eye, the rather high valley on the very left of the histogram turned out to be significant.

In the next step (S9), the computer will create correlation data assigning each file to a cluster at each level, e.g. by creating pointers or by entering the files into a hierarchical data structure. In the preferred embodiment, the computer will establish a distance matrix with every row and column corresponding to a file, wherein the elements of the matrix are the distances between any two files. The computer will then remove any entries indicating a distance greater than the respective limiting value and then will analyse the matrix whether it can be transformed by permutation to a matrix consisting of diagonal submatrices having at least one non-zero element in each row and column. Of course, this procedure can also be carried out graphically in that the computer analyses the edges between the files represented as vertices, removes those edges longer than the respective limiting value and assigns the elements of connected subgraphs to clusters at the lowest level. Alternatively, other assignment criteria may be used in step S9, as outlined previously.

The graphical approach is shown in Fig. 5. In Fig. 5 the documents are indicated by boxes labelled 0 to 47 and distances between the boxes are indicated by lines. All lines corresponding to a distance between documents longer than the first cutpoint C1 have been deleted. This is indicated by the two sliders on the left of the picture. The left slider (maximum slider) indicates that no distances greater than the first cutpoint (label 0) are shown and the slider on the right (minimum slider) indicates that all distances less than the first cutpoint are shown. The symbols for the documents have been rearranged for the sake of clarity. It should be noted, however, that the length of the lines shown in Fig. 5 is unrelated to the distance between the documents.

One can see that there are eleven clusters with three documents, one cluster with six elements and one cluster with nine elements.

In the next step the process is repeated for the next higher level cluster in that entries in the original distance matrix are cancelled which are greater than the second limiting value and connected graphs or respective submatrices are looked for. Alternatively, one may replace the original distance matrix by a matrix, wherein each submatirx mentioned in the previous paragraph is represented by an element of the new matrix, so that each element of the matrix corresponds to a pair of clusters at the next lower level than the one being considered. The elements of this new matrix are given the distance of the clusters to be defined, as previously discussed. The process is then repeated to find either connected graphs of clusters or diagonal submatrices of clusters.

The same is repeated for the higher order clusters. The highest order cluster is the totality of documents considered.

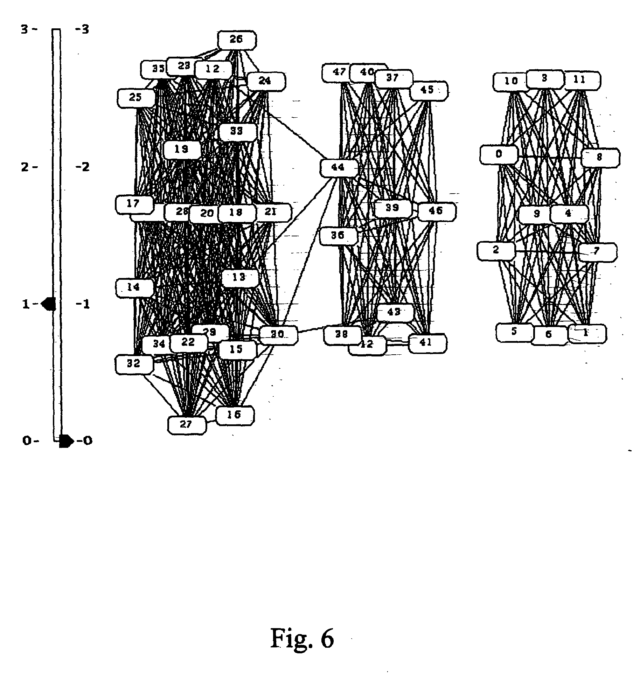

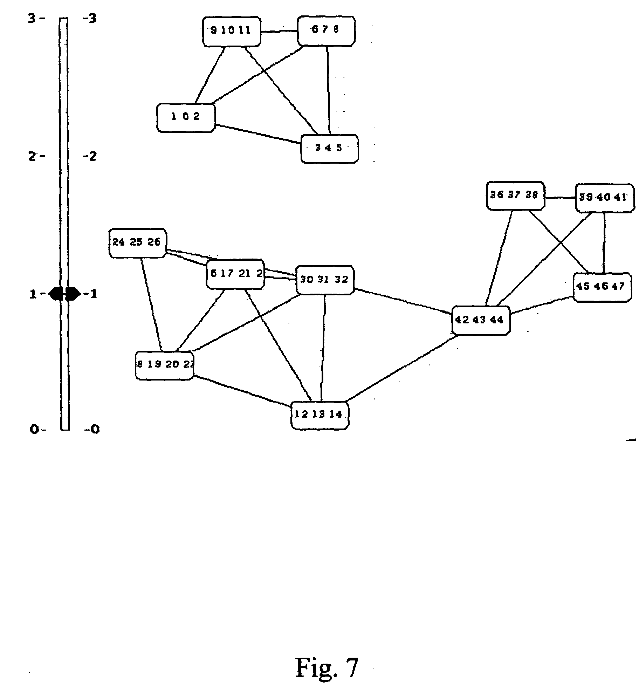

The graphical approach for the second level is illustrated in Fig. 6 and 7. Fig. 6 shows the documents, again rearranged for better viewing, with lines representing all distances less than the second cutpoint C2 (maximum slider = 1, minimum slider = 0). Fig. 7 shows a diagram where all lines corresponding to distances less than the first cutpoint and greater than the second cutpoint. Fig. 7 no longer shows individual documents. Rather, the boxes represent the clusters shown in Fig. 5. In Fig. 7 documents that are elements of the cluster are indicated in the related box. For the larger clusters, it was not possible to indicate all elements. One can see from Fig. 6 and 7 that at first sight there appear to be three clusters. Referring to Fig. 6, there are, however, elements in the cluster on the very left and in the middle that have a distance from each other less than the second cutpoint, e.g. document 30 and document 44 or document 43 and document 30. On the other hand, the cluster on the very right is completely isolated from the remaining clusters. Accordingly, the left and the middle cluster are combined to one single cluster so that there are two clusters at the second level.

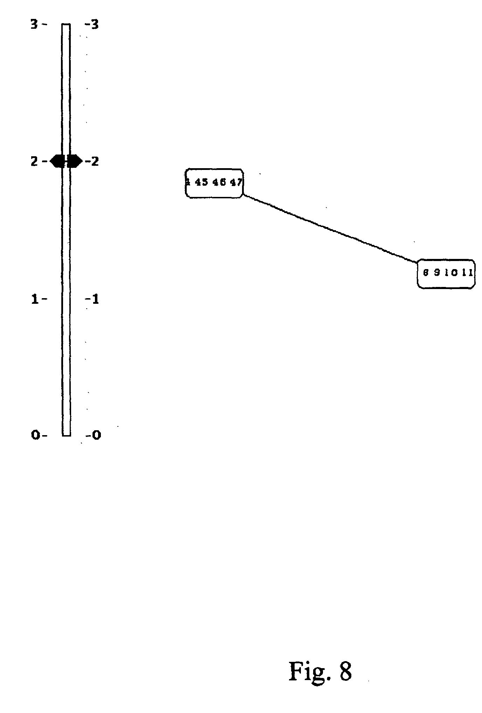

Fig. 8 shows a graphical display of clusters derived from the sample of Fig. 3 wherein all lines corresponding to distances greater than the third cutpoint and less than the second cutpoint are deleted. Again, clusters at the second level have once more been-collapsed into one symbol, since lines corresponding to distances less than the second cutpoint have been deleted. One can see that there is only one line connecting the two clusters, meaning that there is only one cluster at the third level.

It should be noted that in this example the clusters have been defined in a manner that for any element of the cluster there is another element having a distance less than the relevant cutpoint. This, however, implies that there may be elements in a cluster that have distances greater than the relevant cutpoint, for example documents 25 and 41 in the diagram of Fig. 6. This explains why there is a large peak on the right of the third cutpoint in Fig. 4, although this peak does not correspond to a further cluster level. Comparing Fig. 3 and 4 with the number of cluster levels resulting from the method according to the invention it is apparent that the approach taken according to the present invention, namely fitting polynomials (or other suitable functions) to a histogram, is more objective and may lead to results different from those one would expect from a visual inspection of the graphical display of elements, as in Fig. 3, or a histogram of the density of distances, as in Fig. 4.

In an alternative embodiment, when determining higher order clusters, one may determine the second order clusters in the same way as the first order clusters were determined, i.e. determining all files that have a distance less than the second cutpoint from a file randomly picked out.

If there is a large number of files or documents, one may establish the limiting values defining the cluster structure only on the basis of a random sample of these files, e.g. establish the distances and the density of distances only for this sample, determine limiting values for the various clusters from the density thus obtained, as explained previously, and then assign all documents, i. e. not only the random sample, to clusters at the various levels.

It should be understood that the method automatically determines the number of hierarchy levels that is best suitable. In some cases it will be sensible to limit the maximum number of levels in order to avoid data structures that are too complex. In these cases one will use only polynomials up to a given order and choose that polynomial among these that shows the best fit.

Depending on the approximation by the polynomial, a zero of the polynomial following a peak may be a better approximation to the true boundary of the peak in case of sharp peaks. As there can be two zeros between two peaks, one has to be careful to pick out the one that most closely approximates the actual upper limit of the peak. On the other hand, if the peak to be approximated is rather wide, the first zero following the peak might cut off a relevant portion of the peak and thus exclude files from a cluster at the respective level to which they should reasonably belong. In these cases it may be better to chose the minimum or even the second zero as the cutpoint. In other cases there may not be any zeros between two maxima of the polynomial. These problems can be taken care of by determining both the minima and the zeros of the polynomial and to check which of these forms the best approximation to the peak of the function that is fitted by the polynomial.

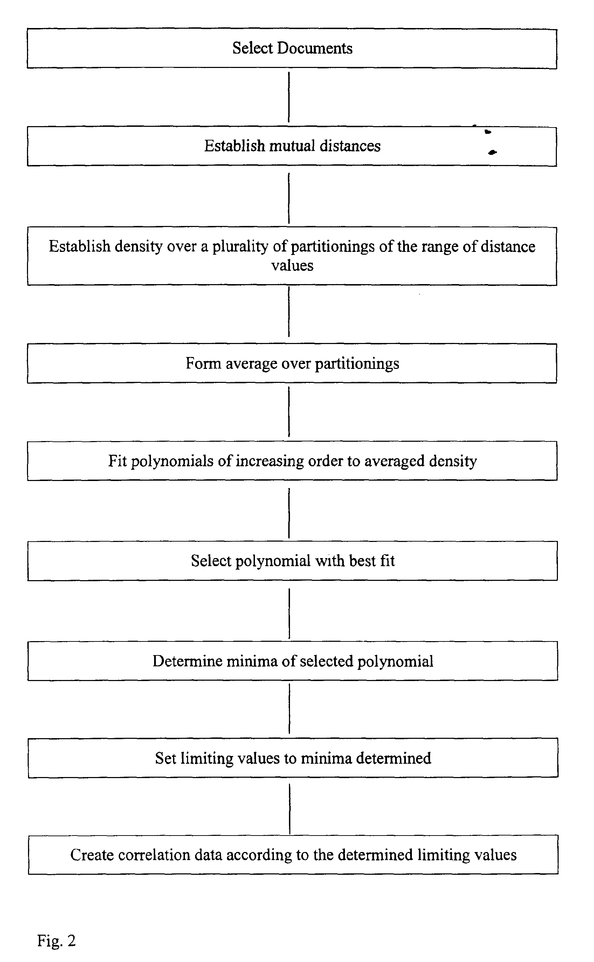

The best possible fit of a polynomial to the density of distances may depend on the number of bins involved or, more specifically, on the width of each bin. The invention may provide that instead of fitting a polynomial to a histogram established for a specific bin size, the density of distances is established for various bin sizes and an average is formed over all these bin sizes. This leads to an average step function or histogram to which polynomials of various order are fitted, as explained previously. This modified algorithm is shown in Fig. 2.

A specific algorithm could be as follows.

First, a vector of distances vd is defined. The vector has a length of

$$m = n(n-1)/2,$$

where n is the number of files considered for establishing the cluster structure. This may be the totality of files or only a random sample, as set out previously. The vector vd comprises the value of distances for each pair of files as its element.

In the next step, a maximum number of levels, maxlevels, is defined as

$$maxlevels = min(MAXLEVELS, m/2),$$

where MAXLEVELS is the maximum level of numbers defined by the system or by the user. If maxlevels is less than 2, there is only one cluster level comprising all files considered.

In a further step, the maximum number of bins, maxbins, is defined as

$$maxbins = min(MAXBINS,(xmax-xmin+dx)/dx),$$

where MAXBINS is a number predetermined by the system or the user, e.g. 100, xmin and xmax are respectively the smallest and largest distances in the distance vector vd and dx is the smallest nonzero difference between two distance values in the distance vector vd.

For determining the cutpoints by averaging over a plurality of binning strategies, vectors xvals, ymeans and ysds, with the size maxbins, and a matrix fvals, with the size maxbins x maxbins, are defined. maxbins is the number of bins for the binning strategy with the smallest bins. To each of the bins according to the strategy with maxbins bins a value of the distance is assigned which is defined as the center point of each bin. The values of xvals are set to be the center point of each of the bins for the binning strategy with the smallest bins.

The matrix fvals is intended to hold the values of the density of distances for each binning strategy. Each column of this matrix receives the values of the density related to an element at xvals for the various binning strategies, i.e. to the distance values assigned to each bin for the strategy with the smallest bins. For strategies with larger bins the density function is considered as a step function, i.e. for every element of xvals that falls within a certain bin of a binning strategy, the same value of the density is entered into the matrix. For example, if the first strategy is to use maxbins bins and the next strategy is to use maxbins/2 bins, every two successive elements of xbins will be given the same value of the density in fvals for the second binning strategy.

When all elements of the matrix fvals have being given a value, the average is formed over each row of fvals and this average is set to be the value of the respective element of the vector ymeans. The respective standard deviation is entered into the respective element of ysds.

The result of this is an averaged density function, the values of which are the values of the vector ymeans and the respective standard deviation of the values are the elements of ysds. Graphically, one may represent this as a diagram of measurement points with an error bar assigned to each point.

In the next step, polynomials of increasing degree 1 are fitted to this function, in the same way as a function is fitted to points of experimental measurements. Basically, the same fitting techniques may be employed. A least square fit may be used, but any other fitting method may be employed, as appropriate. For each degree of the polynomial, the value $y^1_i$ of the polynomial of degree 1 corresponding to the element i of the vector xvals, is calculated and the error of this polynomial is calculated as

$$err^l = \left(\sum_i \left(y^l_i - ymeans_i\right)^2\right)^{1/2}$$

where i is the index of the elements of the vector ymeans.

The degree 1 of the polynomial is limited by the value of maxlevels determined previously in that

$$1 \leq 2 \text{ maxlevels.}$$

It should be noted that, since a polynomial of degree 21 has at most 1 peaks, this effectively limits the number of peaks and thus of cluster levels to maxlevels.

In the next step the polynomial with the least error $err^1$ is determined, amongst those polynominals with degrees $1 \leq 2$ maxlevels.

In the next step the minima of this polynomial are determined and set to be the first, second and further limiting values or cutpoints of the distance. The last cutpoint is set to be either infinity or the largest value of the distance in the vector vd. The number of cluster levels corresponds to the number of cutpoints thus found.

It should be noted that the algorithm automatically reduces the number of cluster levels to a value less than the predetermined number of maximum levels, if appropriate. Thus, the clustering structure according to the present invention is truly dynamic in that it does not provide a static structure with a predetermined number of hierarchy levels, but rather adapts the number of levels to the kind of documents found.

Having thus established the cutpoints for the various cluster levels, each of the documents is assigned to a cluster at each level, as set out previously. The corresponding algorithm is straightforward and needs no further explanation.

Alternative to fitting polynomials of various degree to the distribution function, one may also search the distribution function given by ymeans for its minima or the (maxlevels - 1) first minima, if the number of minima is larger than (maxlevels - 1), and use these values as the boundary values to establish the cluster structure. One may also combine the two approaches by searching the minima of the polynomial and then search the distribution function ymeans for its closest minimum. This is actually the preferred strategy.

It should be understood that the foregoing example is entirely non-restrictive and illustrative and that various modifications can be made without leaving the scope of the present invention. For example, the function with which the density of distances is fitted need not be a polynomial, but may be another suitable function, e.g. a trigonometric function. Especially, one could use Fourier analysis. Instead of a polynomial, a rational function, e.g. a ratio of two polynomials, may also be used, which sometimes has the advantage that peaks in a function can be better modelled. Rational functions or polynomials have the advantage that the number of minima and zero's are directly related to the order of the function and need not be equally spaced, like in trigonometric functions, but can be shifted during the fitting process by adjusting the respective coefficients. Thus, they are especially suitable for fitting a density function with peaks of varying width.

Especially, the distance measure employed in the context of the present invention can be different from the specific examples set out previously. If, for example, data files have already been ordered in a hierarchy where all files are elements of the lowest level of said hierarchy, the hierarchy being represented by branches and nodes connecting the branches, one could define the distance by the number of nodes one has to pass in order to get from one element to the other. For example, if two elements are linked by a node at the second lowest level, the distance will be one, if they are each linked to different nodes at the second lowest level, but linked to the same node at the third lowest level, the distance will be three and if one is directly linked to the node at the third lowest level, whereas the other one is linked to this third level node through a second level node, the distance will be two. One may as well define trees, e.g. an UPGMA tree, where the branch lengths may differ in a manner such that the sum of the branch lengths is equal to the total distance between items in an original distance matrix, i.e. where rows and columns correspond to individual items to be clustered and the elements of the matrix indicating the distance between these two items. In this case, the distance of two points is the sum of the branch lengths of the shortest connection between these two points.

The features of the present invention disclosed in the foregoing specification and the claims can be material for the realization of the invention in its various embodiments both separately and in arbitrary combination thereof.

## Claims

**1.** Method of automatically ordering a plurality of sets of electronic data by means of a data processing unit, comprising the following steps to be performed by said data processing unit:

- at least for a selected group of data sets, determining the distance D between any two data sets, said distance being defined as a function of a pair of two data sets, rendering a numerical value, said function having a first value $D_0$ defined for the case of a pair of identical data sets, the difference of the distance D of any pair to said value $D_0$ being defined to be either greater than or equal zero for all pairs, $D-D_0 \geq 0$, or less than or equal zero for all pairs, $D-D_0 \leq 0$,

- determining the density of distance values over the range of determined distance values,
- determining one or more limiting values, at least some of the limiting values defining an upper boundary of a peak in said density of distance values, respectively, if said difference is defined to be $D-D_0 \geq 0$ for all pairs, and at least some of the limiting values defining a lower boundary of a peak, respectively, if said difference is defined to be $D-D_0 \leq 0$, said limiting values forming an increasing series in case of a plurality of limiting values,
- creating correlation data correlating each data set to a cluster in a hierarchy of clusters, the number of cluster levels in said hierarchy corresponding to the number of limiting values, wherein,

if said difference is defined to be $D-D_0 \geq 0$ for all pairs,

- the data sets contained in each first level cluster in said hierarchy are related to one another in that for each data set the minimum pairwise distance to other data sets in said cluster is less than the lowest limiting value,
- each higher order cluster in said hierarchy comprises data sets of a group of one or more clusters of lower levels, wherein, if said group comprises more than one cluster, each cluster in this group forms a pair with another cluster in this group for which pair there is at least one data set of one cluster of said pair having a distance from a data set of the other cluster of said pair which is less than that limiting value that is the next higher one in said increasing series of limiting values to that limiting value defining clusters at the next lower level,

and, if said difference is defined to be $D-D_0 \leq 0$ for all pairs,

- the data sets contained in each first level cluster in said hierarchy are related to one another in that for each data set the maximum pairwise distance to other data sets in said cluster is greater than the highest limiting value,
- each higher order cluster in said hierarchy comprises data sets of a group of one or more clusters of lower levels, wherein, if said group comprises more than one cluster, each cluster in this group forms a pair with another cluster in this group for which pair there is at least one data set of one cluster of said pair having a distance from a data set of the other cluster of said pair, which is greater than that limiting value that is the next lower one in said increasing series of limiting values to that limiting value defining clusters at the next lower level.

2. Method according to claim 1, **characterised in that** it comprises the step of creating data correlating each data set to a cluster in a hierarchy of clusters, the number of cluster levels in said hierarchy corresponding to the number of limiting values, wherein, if said difference is defined to be $D-D_0 \geq 0$ for all pairs,

- each first level cluster in said hierarchy comprises at least one data set to which all other data sets of said cluster have a distance less than the lowest limiting value,
- each second level cluster in said hierarchy comprises at least one data set to which all other data sets of said cluster have a distance less than the second lowest limiting value,
- each higher order cluster in said hierarchy comprises at least one data set to which all other data sets of said cluster have a distance which is less than that limiting value that is the next higher one in said increasing series of limiting values to that limiting value defining clusters at the next lower level,

and, if said difference $D-D_0 \leq 0$ for all pairs,

- each first level cluster in said hierarchy comprises at least one data set to which all other data sets of said cluster have a distance greater than the highest limiting value,
- each second level cluster in said hierarchy comprises at least one data set to which all other data sets of said cluster have a distance greater than the second highest limiting value,
- each higher order cluster in said hierarchy comprises at least one data set to which all other data sets of said cluster have a distance which is greater than that limiting value that is the next lower one in said increasing series of limiting values to that limiting value defining clusters at the next lower level.

3. Method according to claim 1 or 2, **characterized in that** said data correlating the data sets to clusters comprise:

- data correlating each data set to one or more first level clusters,

- data correlating each cluster at a level less than the highest level to a cluster or a plurality of clusters at a higher level.

4. Method according to one of claims 1 to 3, **characterized by** the step of controlling a display device on the basis of said correlation data to create a graphic symbolic display of clusters at one or more levels.

5. Method according to one of claims 1 to 4, **characterized by** the step of creating a directory structure on the basis of said correlation data, each cluster corresponding to a directory and each cluster level to a directory level.

6. Method according to one of claims 1 to 5, **characterized by** the step of creating a database from said data sets and said correlation data, the data model of said data base being defined by said hierarchy of clusters.

7. Method according to claim 6, **characterized in that** the database is a relational data base, wherein the keys are defined by cluster names and the values are defined by the name of the parent cluster.

8. Method according to claim 6, **characterized in that** the database is an object oriented data base, wherein the keys are defined by cluster names and the values are defined by the name of the parent directory.

9. Method according to one of claims 1 to 8, **characterized in that** a group of data sets comprising one or more predetermined data elements is selected and said limiting values are determined on the basis of said selected group of data sets.

10. Method according to one of claims 1 to 9, **characterized in that** the total range of distance values is completely partitioned into a sequence of distance intervals and said density of distance values is determined as the number or normalized number of distance values in each distance interval.

11. Method according to claim 10, **characterized in that** a plurality of partitionings of said total range of distances with increasing interval size is established and said density is established for each of said partitionings, and that preliminary limiting values are determined for each partitioning and optimized limiting values are obtained by averaging or fitting said preliminary limiting values, wherein said correlation data are established on the basis of said optimized limiting values.

12. Method according to claim 10 or 11, **characterized in that** a distribution of distance density values is established from said partitioning and said limiting values are determined from said distribution.

13. Method according to one of claims 1 to 12, **characterized in that** one or more limiting values are determined as a minimum or zero point of the density adjacent to a maximum of said density.

14. Method according to claim 1 to 13, **characterized in that** a curve is fitted to density values and one or more limiting values are determined as the point of a minimum or zero adjacent to a maximum of said curve.

15. Method according to claim 14, **characterized in that** said curve is fitted to a distribution of density values.

16. Method according to one of claims 14 or 15, **characterized in that** said curve is a polynomial or a trigonometric function or a function of trigonometric functions.

17. Method according to one of claims 1 to 16, **characterized in that** said data sets comprise text data and said distance is a function of the number of common words of two data sets.

18. Method according to one of claims 1 to 16, **characterized in that** said data sets comprise genetic information and said distance is a function of the number of identical data elements succeeding one another in two partial sequences in said data sets.

19. Method according to one of claims 1 to 18, **characterized in that** the step of creating correlation data comprises

- establishing a distance matrix for all data sets,
- assigning data sets to a first level cluster that are linked by matrix elements having a value less than the lowest limiting value for $D \geq D_0$ or greater than the highest limiting value for $D \leq D_0$.

20. Method according to one of claims 1 to 19, **characterized in that** the data sets are displayed graphically as vertices connected to every other vertex by edges, the length of each edge corresponding to the distance between two data sets, that edges having a length less than that corresponding to the lowest limiting value are removed and data sets represented by a connected remaining subgraph are assigned to the same cluster at the lowest level.

21. Database obtainable by a method of one of claims 1 to 20.

22. Computer program adapted to perform all steps of a method according to claim 1 or any claim dependent thereon.

23. Computer program according to claim 22 embodied in a computer readable medium.

24. Apparatus for automatically ordering a plurality of sets of electronic data according to their similarities, comprising data processing means performing the steps of a method according to one of claims 1 to 20.

25. Apparatus according to claim 24, **characterized in that** it comprises a display device and said data processing means controls said display device according to a method according to claim 4.

26. Apparatus according to one of claims 24 or 25, **characterized in that** it comprises data storage means for storing said data sets in a directory structure, said directory structure being obtainable according to a method according to claim 5.

27. Method of operating an apparatus for searching and/or ordering data sets, said apparatus containing or being capable of obtaining correlation data obtainable according to one of claims 1 to 20, **characterized by** the following steps:

- inputting data elements,
- selecting data sets comprising these data elements,
- selecting a cluster at the lowest level in a hierarchy of the selected data sets defined by said correlation data,

whereupon said apparatus outputs data related to the elements of said selected cluster.

28. Method according to claim 27, **characterized in that** the apparatus, having outputted data related to the elements of said selected cluster outputs data related to the elements of the next higher order cluster comprising said selected cluster and not contained in said selected cluster.

29. Method according to one of claims 27 or 28, **characterized in that** said apparatus proceeds with outputting data related to elements of at least one higher order cluster only upon a related input by a user.

| | |
|---|---|
| Select Documents | S1 |

| | |
|---|---|
| Establish mutual distances | S2 |

| | |
|---|---|
| Partition range of distance values | S3 |

| | |
|---|---|
| Establish density of distance values over said partitioning | S4 |

| | |
|---|---|
| Fit polynomials of increasing order to density | S5 |

| | |
|---|---|
| Select polynomial with best fit | S6 |

| | |
|---|---|
| Determine minima of selected polynomial | S7 |

| | |
|---|---|
| Set limiting values to minima determined | S8 |

| | |
|---|---|
| Create correlation data according to the determined limiting values | S9 |

Fig. 1

Fig. 2

Fig. 3

Fig. 4

Fig. 5

Fig. 6

Fig. 7

Fig. 8